# EUROPEAN PATENT APPLICATION

(11) **EP 4 672 620 A1**
(43) Date of publication of application: **31.12.2025**
(21) Application number: 24199724.6
(22) Date of filing: 11.09.2024
(51) Int. Cl.: H04B 1/18, H04B 1/403, H04W 84/12

(54) **ANTENNA SIGNAL SWITCHING SYSTEM**

(30) Priority: 25.06.2024 CN 202410825122
(71) Applicant: Getac Technology Corporation, New Taipei City 221009 (TW)
(72) Inventor: CHEN, Kuan-Yu, 11568 Taipei City (TW)
(74) Representative: Viering, Jentschura & Partner mbB Patent- und Rechtsanwälte

(57) **Abstract**

An antenna signal switching system includes a first network module; a first switching circuit coupled to the first network module; a first antenna coupled to the first switching circuit, used to transmit and receive a first network signal; a second network module; a second switching circuit coupled to the second network module; a second antenna coupled to the second switching circuit, used to transmit and receive a second network signal; a third switching circuit coupled to the first and second switching circuits; an antenna port group coupled to the third switching circuit, used to transmit and receive the first network signal or second network signal; and a third antenna coupled to the antenna port group, used to transmit and receive the first network signal or second network signal. The third switching circuit is selectively switched to transmit and receive the first network signal or second network signal.

## Description

The instant application claims priority to Chinese Patent Application 202410825122.8, filed June 25, 2024, which is incorporated herein by reference.

### BACKGROUND OF THE INVENTION

### FIELD OF THE INVENTION

The present invention relates to an antenna signal switching system.

### DESCRIPTION OF THE PRIOR ART

When placing a wireless mobile device in a car, the antenna performance of the wireless mobile device will be affected due to the metal structure of the car. In order to achieve better transmission and reception signal quality, the wireless mobile device can be connected to an external antenna attached to the outside of the car to obtain better antenna performance and thereby improve the signal transmission and reception quality. In order to allow users to choose different network signals according to different environments and have better network signal, how to enable wireless mobile devices to switch network signals is an important issue to be solved in this technical field.

The information disclosed in this "BACKGROUND OF THE INVENTION" section is only for enhancement understanding of the background of the invention and therefore it may contain information that does not form the prior art that is already known to a person of ordinary skill in the art. Furthermore, the information disclosed in this "BACKGROUND OF THE INVENTION" section does not mean that one or more problems to be solved by one or more embodiments of the invention were acknowledged by a person of ordinary skill in the art.

### SUMMARY OF THE INVENTION

The present invention provides an antenna signal switching system that allows customers to switch network signals of wireless mobile devices according to different network signals in different environments to obtain better network signal.

Other advantages and objects of the invention may be further illustrated by the technical features broadly embodied and described as follows.

In order to achieve one or a portion of or all of the objects or other objects, an embodiment of the invention provides an antenna signal switching system which includes a first network module, a first switching circuit coupled to the first network module, a first antenna coupled to the first switching circuit and used to transmit and receive a first network signal, a second network module, a second switching circuit coupled to the second network module, a second antenna coupled to the second switching circuit and used to transmit and receive a second network signal, a third switching circuit coupled to the first and second switching circuits, an antenna port group coupled to the third switching circuit and used to transmit and receive the first network signal or second network signal; and a third antenna coupled to the antenna port group and used to transmit and receive the first network signal or second network signal. The third switching circuit is selectively switched to transmit and receive the first network signal or second network signal.

In one embodiment of the invention, the first network module includes a Wireless Local Area Network module, and the second network module includes a Wireless Wide Area Network module.

In one embodiment of the invention, the first antenna and the second antenna are internal antennas of the system, and the third antenna is an external antenna of the system.

In one embodiment of the invention, the second switching circuit includes: a fourth switching circuit, coupled to the second antenna and the third switching circuit, and used to select the second antenna and the third switching circuit to transmit and receive the second network signal; a first duplexer, coupled to the fourth switching circuit, and used to separate the second network signal to extract a first high-frequency signal and a first mixed frequency signal, or to combine the first high-frequency signal and the first mixed frequency signal as the second network signal; a first extractor, coupled to the first duplexer, and used to separate the first mixed frequency signal to extract a first low-frequency signal and a second low-frequency signal, or to combine the first low-frequency signal and the second low-frequency signal as the first mixed frequency signal; a fifth switching circuit, coupled to the first extractor and the antenna port group, and used to provide the second low-frequency signal to the first extractor; a second extractor, coupled to the first extractor and the fifth switching circuit, and used to separate the first mixed frequency signal to extract the first low-frequency signal and the second low-frequency signal, or to combine the first low-frequency signal and the second low-frequency signal as the first mixed frequency signal; a second duplexer, coupled to the first duplexer, the second extractor and the second network module, and used to receive and combine the first high-frequency signal and the first mixed frequency signal as the second network signal and provide the second network signal to the second network module, or to separate the second network signal from the second network module to extract the first high-frequency signal and the first mixed frequency signal.

In one embodiment of the invention, the second low-frequency signal is a global positioning system signal.

In one embodiment of the invention, the second switching circuit includes: a first duplexer, coupled to the third switching circuit, and used to separate the second network signal to extract a first high-frequency signal and a first mixed frequency signal, or to combine the first high-frequency signal and the first mixed frequency signal as the second network signal; a second duplexer, coupled to the second antenna, and used to separate the second network signal to extract the first high-frequency signal and the first mixed frequency signal, or to combine the first high-frequency signal and the first mixed frequency signal as the second network signal; a fourth switching circuit, coupled to the first duplexer and the second duplexer, and used to select the first duplexer or the second duplexer for transmitting and receiving the first high-frequency signal; a first extractor, coupled to the first duplexer, and used to separate the first mixed frequency signal to extract a first low-frequency signal and a second low-frequency signal, or to combine the first low-frequency signal and the second low-frequency signal as the first mixed frequency signal; a second extractor, coupled to the second duplexer, and used to separate the first mixed frequency signal to extract the first low-frequency signal and the second low-frequency signal, or to combine the first low-frequency signal and the second low-frequency signal as the first mixed frequency signal; a fifth switching circuit, coupled to the first extractor and the second extractor, and used to select the first extractor and the second extractor for transmitting and receiving the first low-frequency signal; a sixth switching circuit, coupled to the second extractor and the antenna port group, and used to provide the second low-frequency signal to the first extractor; a third extractor, coupled to the fifth switching circuit and the sixth switching circuit, and used to separate the first mixed frequency signal to extract the first low-frequency signal and the second low-frequency signal, or to combine the first low-frequency signal and the second low-frequency signal as the first mixed frequency signal; a third duplexer, coupled to the fourth switching circuit, the third extractor, and the second network module, and used to receive and combine the first high-frequency signal and the first low-frequency signal as the second network signal and provide the second network signal to the second network module, or to separate the second network signal from the second network module to extract the first high-frequency signal and the first mixed frequency signal.

In one embodiment of the invention, the second low-frequency signal is a global positioning system signal.

In one embodiment of the invention, the antenna port group includes: a first antenna port, coupled to the second network module; a second antenna port, coupled to the third switching circuit and the third antenna; and a third antenna port, coupled to the second network module.

In one embodiment of the invention, the second network module includes a global positioning system module for receiving global positioning system signals.

In one embodiment of the invention, the antenna signal switching system further includes: a processing circuit, coupled to the first switching circuit, the second switching circuit, and the third switching circuit, and used to control the first switching circuit to connect to the first antenna or the third switching circuit, to control the second switching circuit to connect to the second antenna or the third switching circuit, and to control the third switching circuit to connect to the first switching circuit or the second switching circuit.

Since the present invention adopts a switching circuit, the antenna signal switching system provided by the present invention can allow customers to switch the network signals of wireless mobile devices according to different network signals in different environments to obtain better network signal.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of an antenna signal switching system provided by an embodiment of the present invention.
FIG. 2 is a schematic diagram of a second switching circuit provided by a first embodiment of the present invention.
FIG. 3 is a schematic diagram of a second switching circuit provided by a second embodiment of the present invention.

### DETAILED DESCRIPTION OF THE EMBODIMENTS

In the following detailed description of the preferred embodiments, reference is made to the accompanying drawings which form a part hereof, and in which is shown by way of illustration specific embodiments in which the invention may be practiced. The drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including", "comprising", or "having" and variations thereof herein is meant to encompass the items listed thereafter and equivalents thereof as well as additional items. Unless limited otherwise, the terms "connected", "coupled", and "mounted" and variations thereof herein are used broadly and encompass direct and indirect connections, couplings, and mountings. Accordingly, the drawings and descriptions will be regarded as illustrative in nature and not as restrictive.

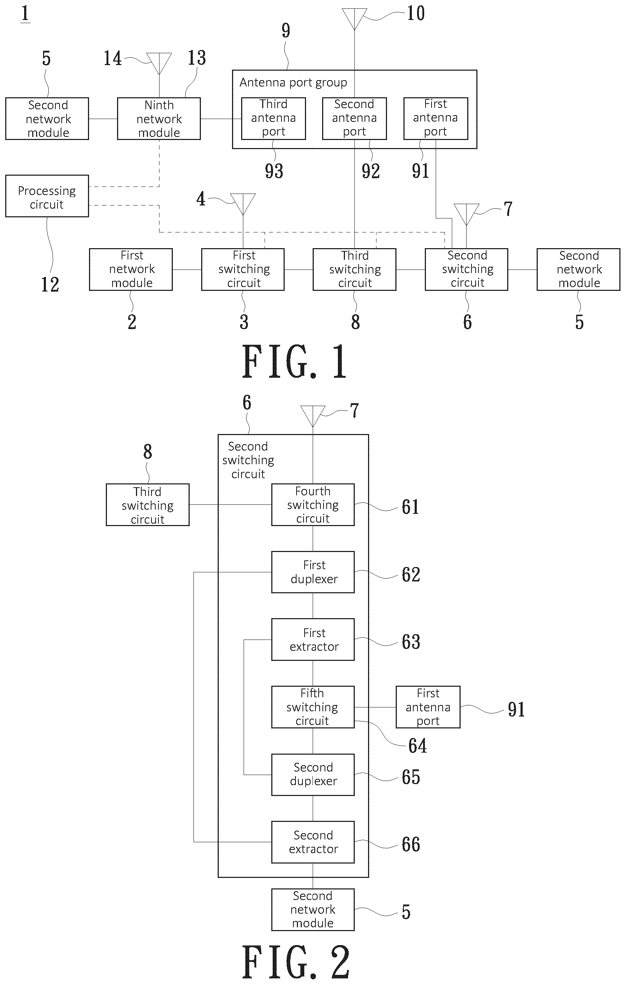

Reference is made to FIG. 1, which is a schematic diagram of an antenna signal switching system provided by an embodiment of the present invention. The antenna signal switching system 1 provided in the embodiment includes a first network module 2; a first switching circuit 3 coupled to the first network module 2; a first antenna 4 coupled to the first switching circuit 3 and used to transmit and receive the first network signal; a second network module 5; a second switching circuit 6 coupled to the second network module 5; a second antenna 7 coupled to the second switching circuit 6 and used to transmit and receive a second network signal; a third switching circuit 8 coupled to the first switching circuit 3 and the second switching circuit 6; an antenna port group 9 coupled to the third switching circuit 8 and used to transmit and receive the first network signal or the second network signal; and a third antenna 10 coupled to the antenna port group 9 and used to transmit and receive the first network signal or the second network signal. The first network module 2 includes a Wireless Local Area Network (WLAN) module, the second network module 5 includes a Wireless Wide Area Network (WWAN) module. The first antenna 4 and the second antenna 7 are internal antennas of the system. The third antenna 10 is an external antenna of the system. The third switching circuit 8 is selectively switched to transmit and receive the first network signal or the second network signal. The first switching circuit 3 is selectively switched to transmit and receive the first network signal of the first antenna 4 or the third switching circuit 8. The second switching circuit 6 is selectively switched to transmit and receive the second network signal of the second antenna 7 or the third switching circuit 8. In addition, the antenna port group 9 includes a first antenna port 91 coupled to the second switching circuit 6; a second antenna port 92 coupled to the third switching circuit 8 and the third antenna 10; and a third antenna port 93 coupled to the second network module 5, wherein the first antenna port 91 and the third antenna port 93 are connected to an external antenna (not shown), and the second network module 5 includes a global positioning system module and is used to receive global positioning system signals. In addition, specifically the ninth switching circuit 13 is connected between the third antenna port 93 and the second network module 5, and the ninth switching circuit 13 can be selectively connected to the fourth antenna 14 to receive the global positioning system signals. It can be noted that the appearance of two second network modules 5 in FIG. 1 is only for illustration. The two second network modules 5 included in FIG. 1 are substantially the same second network module 5. It indicates that the second switching circuit 6 and the ninth switching circuit 13 are respectively connected to different ports of the second network module 5.

In addition, the antenna signal switching system 1 provided in the embodiment further includes a processing circuit 12 coupled to the first switching circuit 3, the second switching circuit 6, the third switching circuit 8, and the ninth switching circuit 13 for controlling the first switching to connect to the first antenna 4 or the third switching circuit 8, controlling the second switching circuit 6 to connect to the second antenna 7 or the third switching circuit 8, controlling the third switching circuit 8 to connect to the first switching circuit 3 or the second switching circuit 6, and controlling the ninth switching circuit 13 to connect to the fourth antenna 14 or the third antenna port 93.

In this way, the antenna signal switching system 1 provided by the present invention allows the customer to control the third switching circuit 8 through the processing circuit 12 for selecting a Wireless Local Area Network or a Wireless Wide Area Network. Therefore, customers can switch the network signals of wireless mobile devices according to different network signals in different environments to obtain better network signal. For example, when the customer's vehicle is located indoors and has a Wireless Local Area Network, the customer can control the third switching circuit 8 to transmit and receive the Wireless Local Area Network signal, or for example, when the customer's vehicle is located outdoors and has a Wireless Wide Area Network, the customer can control the third switching circuit 8 to transmit and receive the Wireless Wide Area Network signal to assist in enhancing a strength of the Wireless Wide Area Network signal.

Reference is made to FIG. 2, which is a schematic diagram of a second switching circuit provided by a first embodiment of the present invention. The second switching circuit 6 provided in the embodiment includes a fourth switching circuit 61, a first duplexer 62, a first extractor 63, a fifth switching circuit 64, a second extractor 65, and a second duplexer 66. The fourth switching circuit 61 is coupled to the second antenna 7 and the third switching circuit 8, and used to select the second antenna 7 and the third switching circuit 8 to transmit and receive the second network signal. The first duplexer 62 is coupled to the fourth switching circuit 61, and used to separate the second network signal to extract a first high-frequency signal and a first mixed frequency signal, or to combine the first high-frequency signal and the first mixed frequency signal as the second network signal. The first extractor 63 is coupled to the first duplexer 62, and used to separate the first mixed frequency signal to extract a first low-frequency signal and a second low-frequency signal, or to combine the first low-frequency signal and the second low-frequency signal as the first mixed frequency signal, wherein the second low-frequency signal is a global positioning system signal. The fifth switching circuit 64 is coupled to the first extractor 63 and the first antenna port 91, and used to provide the second low-frequency signal to the first extractor 63. The second extractor 65 is coupled to the first extractor 63 and the fifth switching circuit 64, and used to separate the first mixed frequency signal to extract the first low-frequency signal and the second low-frequency signal, or to combine the first low-frequency signal and the second low-frequency signal as the first mixed frequency signal. The second duplexer 66 is coupled to the first duplexer 62, the second extractor 65 and the second network module 5, and used to receive and combine the first high-frequency signal and the first mixed frequency signal as the second network signal and provide the second network signal to the second network module 5, or to separate the second network signal from the second network module 5 to extract the first high-frequency signal and the first mixed frequency signal.

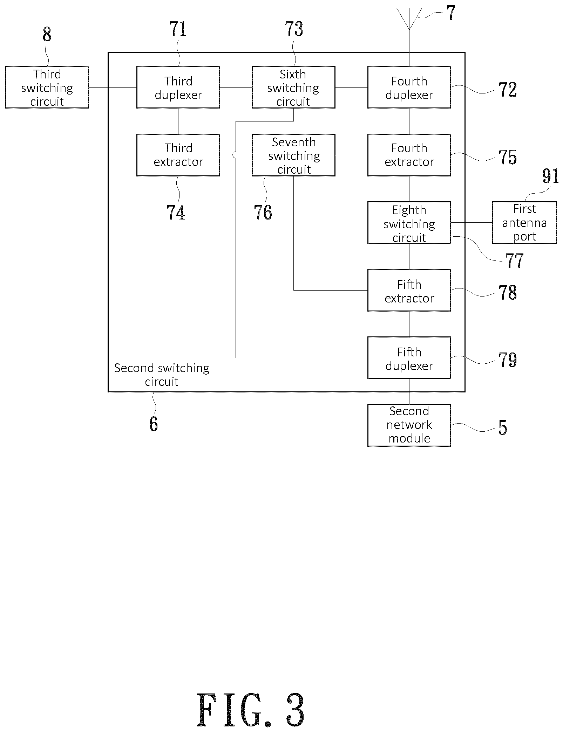

Reference is made to FIG. 3, which is a schematic diagram of a second switching circuit provided by a second embodiment of the present invention. The second switching circuit 6 provided in the embodiment includes a third duplexer 71, a fourth duplexer 72, a sixth switching circuit 73, a third extractor 74, a fourth extractor 75, a seventh switching circuit 76, an eighth switching circuit 77, a fifth extractor 78, and a fifth duplexer 79. The third duplexer 71 is coupled to the third switching circuit 8, and used to separate the second network signal to extract a first high-frequency signal and a first mixed frequency signal, or to combine the first high-frequency signal and the first mixed frequency signal as the second network signal. The fourth duplexer 72 is coupled to the second antenna 7, and used to separate the second network signal to extract the first high-frequency signal and the first mixed frequency signal, or to combine the first high-frequency signal and the first mixed frequency signal as the second network signal. The sixth switching circuit 73 is coupled to the third duplexer 71 and the fourth duplexer 72, and used to select the third duplexer 71 or the fourth duplexer 72 for transmitting and receiving the first high-frequency signal. The third extractor 74 is coupled to the third duplexer 71, and used to separate the first mixed frequency signal to extract a first low-frequency signal and a second low-frequency signal, or to combine the first low-frequency signal and the second low-frequency signal as the first mixed frequency signal, wherein the second low-frequency signal is a global positioning system signal. The fourth extractor 75 is coupled to the fourth duplexer 72, and used to separate the first mixed frequency signal to extract the first low-frequency signal and the second low-frequency signal, or to combine the first low-frequency signal and the second low-frequency signal as the first mixed frequency signal. The seventh switching circuit 76 is coupled to the third extractor 74 and the fourth extractor 75, and used to select the third extractor 74 and the fourth extractor 75 for transmitting and receiving the first low-frequency signal. The eighth switching circuit 77 is coupled to the fourth extractor 75 and the first antenna port 91, and used to provide the second low-frequency signal to the fourth extractor 75. The fifth extractor 78 is coupled to the seventh switching circuit 76 and the eighth switching circuit 77, and used to separate the first mixed frequency signal to extract the first low-frequency signal and the second low-frequency signal, or to combine the first low-frequency signal and the second low-frequency signal as the first mixed frequency signal. The fifth duplexer 79 is coupled to the sixth switching circuit 73, the fifth extractor 78, and the second network module 5, and used to receive and combine the first high-frequency signal and the first low-frequency signal as the second network signal and provide the second network signal to the second network module, or to separate the second network signal from the second network module to extract the first high-frequency signal and the first mixed frequency signal.

In summary, since the present invention adopts switching circuits, the antenna signal switching system provided by the present invention can allow customers to switch the network signals of wireless mobile devices according to different network signals in different environments to obtain better network signal.

The foregoing description of the preferred embodiment of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "The invention" or the like is not necessary limited the claim scope to a specific embodiment, and the reference to particularly preferred exemplary embodiments of the invention does not imply a limitation on the invention, and no such limitation is to be inferred. The invention is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims. Furthermore, the terms such as the first network module, the second network module, the first antenna, the second antenna, the third antenna, the fourth antenna, the first switching circuit, the second switching circuit, the third switching circuit, the fourth switching circuit, the fifth switching circuit, the sixth switching circuit, the seventh switching circuit, the eighth switching circuit, the ninth switching circuit, the first duplexer, the second duplexer, the third duplexer, the fourth duplexer, the fifth duplexer, the first extractor, the second extractor, the third extractor, the fourth extractor, the fifth extractor, the first antenna port, the second antenna port and the third antenna port are only used for distinguishing various elements and do not limit the number of the elements.

## Claims

1. An antenna signal switching system (1), comprising:
a first network module (2);
a first switching circuit (3), coupled to the first network module (2);
a first antenna (4), coupled to the first switching circuit (3), and used to transmit and receive a first network signal;
a second network module (5);
a second switching circuit (6), coupled to the second network module (5);
a second antenna (7), coupled to the second switching circuit (6), and used to transmit and receive a second network signal;
a third switching circuit (8), coupled to the first switching circuit (3) and second switching circuit (6);
an antenna port group (9), coupled to the third switching circuit (8), and used to transmit and receive the first network signal or the second network signal; and
a third antenna (10), coupled to the antenna port group (9), and used to transmit and receive the first network signal or the second network signal;
wherein the third switching circuit (8) is selectively switched to transmit and receive the first network signal or the second network signal.

2. The antenna signal switching system (1) according to claim 1, wherein the first network module (2) comprises a Wireless Local Area Network module, and the second network module (5) comprises a Wireless Wide Area Network module.

3. The antenna signal switching system (1) according to claim 1, wherein the first antenna (4) and the second antenna (7) are internal antennas of the antenna signal switching system (1), and the third antenna (10) is an external antenna of the antenna signal switching system (1).

4. The antenna signal switching system (1) according to claim 1, wherein the second switching circuit (6) comprises:
a fourth switching circuit (61), coupled to the second antenna (7) and the third switching circuit (8), and used to select the second antenna (7) and the third switching circuit (8) to transmit and receive the second network signal;
a first duplexer (62), coupled to the fourth switching circuit (61), and used to separate the second network signal to extract a first high-frequency signal and a first mixed frequency signal, or to combine the first high-frequency signal and the first mixed frequency signal as the second network signal;
a first extractor (63), coupled to the first duplexer (62), and used to separate the first mixed frequency signal to extract a first low-frequency signal and a second low-frequency signal, or to combine the first low-frequency signal and the second low-frequency signal as the first mixed frequency signal;
a fifth switching circuit (64), coupled to the first extractor (63) and the antenna port group (9), and used to provide the second low-frequency signal to the first extractor (63);
a second extractor (65), coupled to the first extractor (63) and the fifth switching circuit (64), and used to separate the first mixed frequency signal to extract the first low-frequency signal and the second low-frequency signal, or to combine the first low-frequency signal and the second low-frequency signal as the first mixed frequency signal; and
a second duplexer (66), coupled to the first duplexer (62), the second extractor (65) and the second network module (5), and used to receive and combine the first high-frequency signal and the first mixed frequency signal as the second network signal and provide the second network signal to the second network module, or to separate the second network signal from the second network module to extract the first high-frequency signal and the first mixed frequency signal.

5. The antenna signal switching system (1) according to claim 4, wherein the second low-frequency signal is a global positioning system signal.

6. The antenna signal switching system (1) according to claim 1, wherein the second switching circuit (6) comprises:
a first duplexer (71), coupled to the third switching circuit (8), and used to separate the second network signal to extract a first high-frequency signal and a first mixed frequency signal, or to combine the first high-frequency signal and the first mixed frequency signal as the second network signal;
a second duplexer (72), coupled to the second antenna (7), and used to separate the second network signal to extract the first high-frequency signal and the first mixed frequency signal, or to combine the first high-frequency signal and the first mixed frequency signal as the second network signal;
a fourth switching circuit (73), coupled to the first duplexer (71) and the second duplexer (72), and used to select the first duplexer or the second duplexer for transmitting and receiving the first high-frequency signal;
a first extractor (74), coupled to the first duplexer (71), and used to separate the first mixed frequency signal to extract a first low-frequency signal and a second low-frequency signal, or to combine the first low-frequency signal and the second low-frequency signal as the first mixed frequency signal;
a second extractor (75), coupled to the second duplexer (72), and used to separate the first mixed frequency signal to extract the first low-frequency signal and the second low-frequency signal, or to combine the first low-frequency signal and the second low-frequency signal as the first mixed frequency signal;
a fifth switching circuit (76), coupled to the first extractor (74) and the second extractor (75), and used to select the first extractor (74) and the second extractor (75) for transmitting and receiving the first low-frequency signal;
a sixth switching circuit (77), coupled to the second extractor (75) and the antenna port group (9), and used to provide the second low-frequency signal to the second extractor (75);
a third extractor (78), coupled to the fifth switching circuit (76) and the sixth switching circuit (77), and used to separate the first mixed frequency signal to extract the first low-frequency signal and the second low-frequency signal, or to combine the first low-frequency signal and the second low-frequency signal as the first mixed frequency signal; and
a third duplexer (79), coupled to the fourth switching circuit (73), the third extractor (78), and the second network module (5), and used to receive and combine the first high-frequency signal and the first low-frequency signal as the second network signal and provide the second network signal to the second network module (5), or to separate the second network signal from the second network module (5) to extract the first high-frequency signal and the first mixed frequency signal.

7. The antenna signal switching system (1) according to claim 6, wherein the second low-frequency signal is a global positioning system signal.

8. The antenna signal switching system (1) according to claim 2, wherein the antenna port group (9) comprises:
a first antenna port (91), coupled to the second network module (5);
a second antenna port (92), coupled to the third switching circuit (8) and the third antenna (10); and
a third antenna port (93), coupled to the second network module (5).

9. The antenna signal switching system (1) according to claim 8, wherein the second network module (5) comprises a global positioning system module for receiving global positioning system signals.

10. The antenna signal switching system (1) according to claim 1, further comprising:
a processing circuit (12), coupled to the first switching circuit (3), the second switching circuit (6), and the third switching circuit (8), and used to control the first switching circuit (3) to connect to the first antenna (4) or the third switching circuit (8), to control the second switching circuit (6) to connect to the second antenna (7) or the third switching circuit (8), and to control the third switching circuit (8) to connect to the first switching circuit (3) or the second switching circuit (6).

## Amended claims

### Amended claims in accordance with Rule 137(2) EPC.

1. An antenna signal switching system (1), comprising:
a first network module (2);
a first switching circuit (3), coupled to the first network module (2);
a first antenna (4), coupled to the first switching circuit (3), and used to transmit and receive a first network signal;
a second network module (5);
a second switching circuit (6), coupled to the second network module (5);
a second antenna (7), coupled to the second switching circuit (6), and used to transmit and receive a second network signal;
a third switching circuit (8), coupled to the first switching circuit (3) and second switching circuit (6);
an antenna port group (9), coupled to the third switching circuit (8), and used to transmit and receive the first network signal or the second network signal; and
a third antenna (10), coupled to the antenna port group (9), and used to transmit and receive the first network signal or the second network signal;
wherein the third switching circuit (8) is selectively switched to transmit and receive the first network signal or the second network signal;
wherein the first network module (2) comprises a Wireless Local Area Network module, and the second network module (5) comprises a Wireless Wide Area Network module;
wherein the antenna port group (9) comprises:
a first antenna port (91), coupled to the second network module (5);
a second antenna port (92), coupled to the third switching circuit (8) and the third antenna (10); and
a third antenna port (93), coupled to the second network module (5).

2. The antenna signal switching system (1) according to claim 1, wherein the first antenna (4) and the second antenna (7) are internal antennas of the antenna signal switching system (1), and the third antenna (10) is an external antenna of the antenna signal switching system (1).

3. The antenna signal switching system (1) according to claim 1, wherein the second switching circuit (6) comprises:
a fourth switching circuit (61), coupled to the second antenna (7) and the third switching circuit (8), and used to select the second antenna (7) and the third switching circuit (8) to transmit and receive the second network signal;
a first duplexer (62), coupled to the fourth switching circuit (61), and used to separate the second network signal to extract a first high-frequency signal and a first mixed frequency signal, or to combine the first high-frequency signal and the first mixed frequency signal as the second network signal;
a first extractor (63), coupled to the first duplexer (62), and used to separate the first mixed frequency signal to extract a first low-frequency signal and a second low-frequency signal, or to combine the first low-frequency signal and the second low-frequency signal as the first mixed frequency signal;
a fifth switching circuit (64), coupled to the first extractor (63) and the antenna port group (9), and used to provide the second low-frequency signal to the first extractor (63);
a second extractor (65), coupled to the first extractor (63) and the fifth switching circuit (64), and used to separate the first mixed frequency signal to extract the first low-frequency signal and the second low-frequency signal, or to combine the first low-frequency signal and the second low-frequency signal as the first mixed frequency signal; and
a second duplexer (66), coupled to the first duplexer (62), the second extractor (65) and the second network module (5), and used to receive and combine the first high-frequency signal and the first mixed frequency signal as the second network signal and provide the second network signal to the second network module, or to separate the second network signal from the second network module to extract the first high-frequency signal and the first mixed frequency signal.

4. The antenna signal switching system (1) according to claim 3, wherein the second low-frequency signal is a global positioning system signal.

5. The antenna signal switching system (1) according to claim 1, wherein the second switching circuit (6) comprises:
a first duplexer (71), coupled to the third switching circuit (8), and used to separate the second network signal to extract a first high-frequency signal and a first mixed frequency signal, or to combine the first high-frequency signal and the first mixed frequency signal as the second network signal;
a second duplexer (72), coupled to the second antenna (7), and used to separate the second network signal to extract the first high-frequency signal and the first mixed frequency signal, or to combine the first high-frequency signal and the first mixed frequency signal as the second network signal;
a fourth switching circuit (73), coupled to the first duplexer (71) and the second duplexer (72), and used to select the first duplexer or the second duplexer for transmitting and receiving the first high-frequency signal;
a first extractor (74), coupled to the first duplexer (71), and used to separate the first mixed frequency signal to extract a first low-frequency signal and a second low-frequency signal, or to combine the first low-frequency signal and the second low-frequency signal as the first mixed frequency signal;
a second extractor (75), coupled to the second duplexer (72), and used to separate the first mixed frequency signal to extract the first low-frequency signal and the second low-frequency signal, or to combine the first low-frequency signal and the second low-frequency signal as the first mixed frequency signal;
a fifth switching circuit (76), coupled to the first extractor (74) and the second extractor (75), and used to select the first extractor (74) and the second extractor (75) for transmitting and receiving the first low-frequency signal;
a sixth switching circuit (77), coupled to the second extractor (75) and the antenna port group (9), and used to provide the second low-frequency signal to the second extractor (75);
a third extractor (78), coupled to the fifth switching circuit (76) and the sixth switching circuit (77), and used to separate the first mixed frequency signal to extract the first low-frequency signal and the second low-frequency signal, or to combine the first low-frequency signal and the second low-frequency signal as the first mixed frequency signal; and
a third duplexer (79), coupled to the fourth switching circuit (73), the third extractor (78), and the second network module (5), and used to receive and combine the first high-frequency signal and the first low-frequency signal as the second network signal and provide the second network signal to the second network module (5), or to separate the second network signal from the second network module (5) to extract the first high-frequency signal and the first mixed frequency signal.

6. The antenna signal switching system (1) according to claim 5, wherein the second low-frequency signal is a global positioning system signal.

7. The antenna signal switching system (1) according to claim 1, wherein the second network module (5) comprises a global positioning system module for receiving global positioning system signals.

8. The antenna signal switching system (1) according to claim 1, further comprising:
a processing circuit (12), coupled to the first switching circuit (3), the second switching circuit (6), and the third switching circuit (8), and used to control the first switching circuit (3) to connect to the first antenna (4) or the third switching circuit (8), to control the second switching circuit (6) to connect to the second antenna (7) or the third switching circuit (8), and to control the third switching circuit (8) to connect to the first switching circuit (3) or the second switching circuit (6).
